# FASCICULE DE BREVET EUROPEEN

(11) **EP 0 486 376 B1**
(45) Date de publication et mention de la délivrance du brevet: **10.08.1994**
(21) Numéro de dépôt: 91403015.0
(22) Date de dépôt: 08.11.1991
(51) Int. Cl.: B01D 19/02, B01D 21/24

(54) **Installation pour l'écumage d'une cuve**
Vorrichtung zum Entschäumen eines Bottichs
Device for the defoaming of a tank

(30) Priorité: 12.11.1990 FR 9013995
(43) Date de publication de la demande: 20.05.1992
(73) Titulaire: NORDON & CIE, F-54000 Nancy (FR)
(72) Inventeur: Sauvage, René, F-54690 Eulmont (FR); Schaaff, Gérard, F-54770 Laitre s/Amance (FR)
(74) Mandataire: Picard, Jean-Claude Georges

(56) Documents cités:
- DE-A- 2 013 421
- DE-A- 2 359 477
- DE-A- 3 322 624
- DE-B- 1 140 905
- DE-C- 728 155
- DE-U- 9 000 723
- GB-A- 795 992
- GB-A- 886 912
- GB-A- 1 026 414
- US-A- 1 957 185
- US-A- 2 613 810
- US-A- 2 780 361

## Description

La présente invention concerne une installation pour l'écumage d'une cuve, à savoir une installation destinée à effectuer une séparation entre un liquide contenu dans la cuve et une couche de matières surnageantes, mousse ou autres.

L'invention pourra trouver application par exemple en malterie, pour écumer des cuves de trempage d'orge, ou dans tout autre type d'industrie alimentaire, lorsque les consignes d'hygiène, de plus en plus strictes, imposent que la mousse ou écume surnageante, ou toutes autres matières flottant à la surface d'un liquide contenu dans une cuve, en soient séparées dans des conditions d'extrême propreté.

Le document GB-A-886 912 décrit une installation d'écumage de cuve comportant une lame de raclage radiale, avec un déversoir basculant. Dans le document DE-C-728 155, on utilise également une lame de raclage radiale, avec une rigole d'écumage radiale. Dans ces deux installations, l'écume, n'étant pas contenue vers l'avant, est chassée devant la lame de raclage, et ne peut donc être évacuée que lentement, lorsque la lame a effectué un certain nombre de tours.

Le but de la présente invention est de remédier à ce type d'inconvénient, en faisant en sorte que la surface de liquide qui se trouve devant l'organe d'écumage soit de plus en plus réduite, pour contenir l'écume dans un espace de plus en plus petit, et permettre ainsi d'en évacuer une quantité importante à chaque tour de balayage.

Le but de la présente invention est également de parvenir à ce résultat sans grande consommation d'eau, et grâce à un système facilement automatisable.

A cet effet, une installation d'écumage de cuve conforme à l'invention sera essentiellement caractérisée en ce qu'elle comporte une toile filtrante de balayage plane et maintenue dans un plan vertical, qui peut être entraînée en rotation de sorte que son bord inférieur balaye la surface supérieure du liquide contenu dans la cuve pour en éliminer l'écume en la poussant vers un déversoir.

Avantageusement, ladite toile filtrante est tendue entre un enrouleur-dérouleur et des moyens moteurs. On peut prévoir en particulier que l'enrouleur-dérouleur est disposé à la périphérie de la cuve et que lesdits moyens moteurs sont agencés pour se déplacer le long de cette périphérie.

Selon un mode de réalisation, ladite toile filtrante passe sur un pivot central de la cuve.

Il sera en tout cas avantageux de prévoir en outre que l'installation comporte des moyens de nettoyage de ladite toile.

Deux modes d'exécution de l'installation vont maintenant être décrits à titre d'exemples nullement limitatifs, avec référence aux figures du dessin annexé dans lequel :
- la figure 1 est une vue en perspective partielle d'un premier mode de réalisation de l'invention ;
- la figure 2 est une vue schématique en plan de ce premier mode de réalisation ;
- la figure 3 est une vue en perspective partielle d'un second mode de réalisation ; et
- la figure 4 est une vue schématique en plan de ce second mode de réalisation.

Sur les différentes figures, 1 désigne une cuve, par exemple de malterie, supposée cylindrique, et 2 désigne la toile filtrante. L'enrouleur-dérouleur de toile est référencé en 3, et les moyens moteurs en 4, les indices d, 1, 2, i, f désignant différentes positions de ces moyens. La référence 5 désigne un déversoir pour l'évacuation de l'écume ou autres matières flottantes, à séparer du liquide contenu dans la cuve.

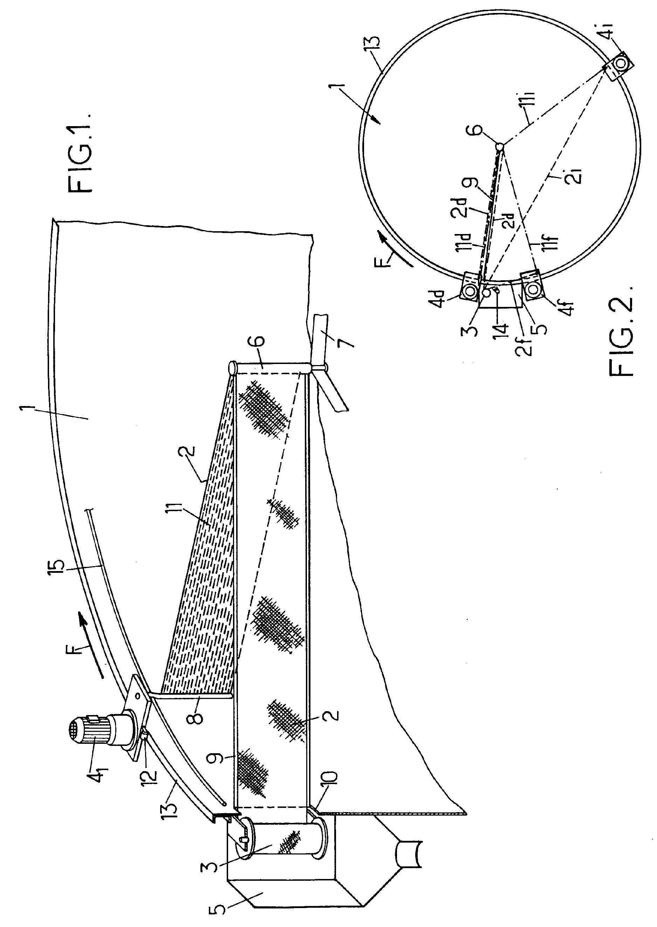

Dans le mode de réalisation des figures 1 et 2, la cuve 1 est équipée d'un pivot central 6 monté sur des bras de support 7. La toile 2 est ainsi tendue verticalement à la partie supérieure de la cuve, entre l'enrouleur-dérouleur 3 et une barre verticale 8 solidaire des moyens moteurs 4, en passant sur ce pivot central 6. Ce pivot sert encore d'appui à une tôle pleine radiale et fixe 9 reliée à la paroi latérale de la cuve, juste en aval d'une encoche d'évacuation 10 en communication avec le déversoir 5, et à une tôle perforée mobile 11 ou tôle râcleuse, supportée à l'autre extrémité par la barre verticale 8 et disposée derrière la toile 2.

Les indices d, i et f ont été aussi utilisés pour repérer différentes positions de la tôle mobile 11 et de la toile 2.

Quant aux moyens moteurs 4, avantageusement constitués d'un moteur électrique, ils peuvent se déplacer sur le pourtour de la cuve 1 dans le sens de la flèche F (en phase d'écumage), grâce à des galets ou analogues 12 roulant sur un chemin de roulement 13, l'entraînement sans glissement étant assuré par exemple par un système à engrenage et crémaillère.

Le fonctionnement de ce mode de réalisation est le suivant.

La position de départ est représentée pour les moyens moteurs en 4_{d} à la figure 2. Les tôles fixe 9 et mobile 11_{d} sont accolées. La toile filtrante 2 les entoure en suivant le trajet 8-6-3. Les moyens moteurs étant mis en route pour se déplacer dans le sens de la flèche F, la tôle mobile râcleuse 11 et la toile filtrante 2 se déplacent dans le même sens en poussant devant elles la mousse ou autres corps surnageants. Jusqu'au moment où les moyens moteurs 4 arrivent en un emplacement de la périphérie de la cuve 1 à peu près diamétralement opposé à l'enrouleur 3, ce dernier est pratiquement inactif, puisque la longueur de toile active 2 est à peu près égale au diamètre de la cuve.

Ensuite, par contre, la toile filtrante 2 se décolle de la tôle mobile perforée 11 (voir la position intermédiaire 4ᵢ-11ᵢ sur la figure 2), et l'enrouleur 3 est mis en route pour enrouler la toile en la maintenant sous tension, puisque sa longueur active doit alors diminuer constamment jusqu'à la position finale 2f.

Dans la position intermédiaire représentée à la figure 2, on comprend que les matières flottantes à éliminer se trouvent encore devant la toile 2ᵢ (en bas du dessin), et qu'elles y restent bien entendu jusqu'à la position finale 2_{f}, pour laquelle la longueur de toile non enroulée est minimale. On comprend qu'avec cette installation toute la mousse ou autre matière peut être évacuée par l'encoche 10 dans le déversoir 5.

Le moteur (non représenté) de l'enrouleur-dérouleur 3 étant ensuite débrayé, on entraîne les moyens moteurs 4 dans le sens inverse de la flèche F, pour les ramener, ainsi que la tôle mobile 11 et la toile 2, à la position de départ repérée par les indices d. Pendant ce trajet de retour, la toile filtrante 2 est nettoyée avec de l'eau ou un produit de lavage, au fur et à mesure de son déroulement, grâce à une rampe de nettoyage 14 disposée près de l'enrouleur 3, la référence 15 désignant par ailleurs une rampe de nettoyage de la cuve 1.

A titre de variante, le nettoyage de la toile pourrait être effectué au cours du trajet aller, pendant son enroulement. Quant à la rampe de nettoyage de la cuve, elle pourrait être mobile, au lieu d'être fixe, s'agissant alors d'une rampe parallèle à l'axe de la cuve, et se déplaçant à proximité de sa paroi.

Bien entendu, toutes les opérations et phases de fonctionnement qui viennent d'être décrites peuvent être facilement automatisées.

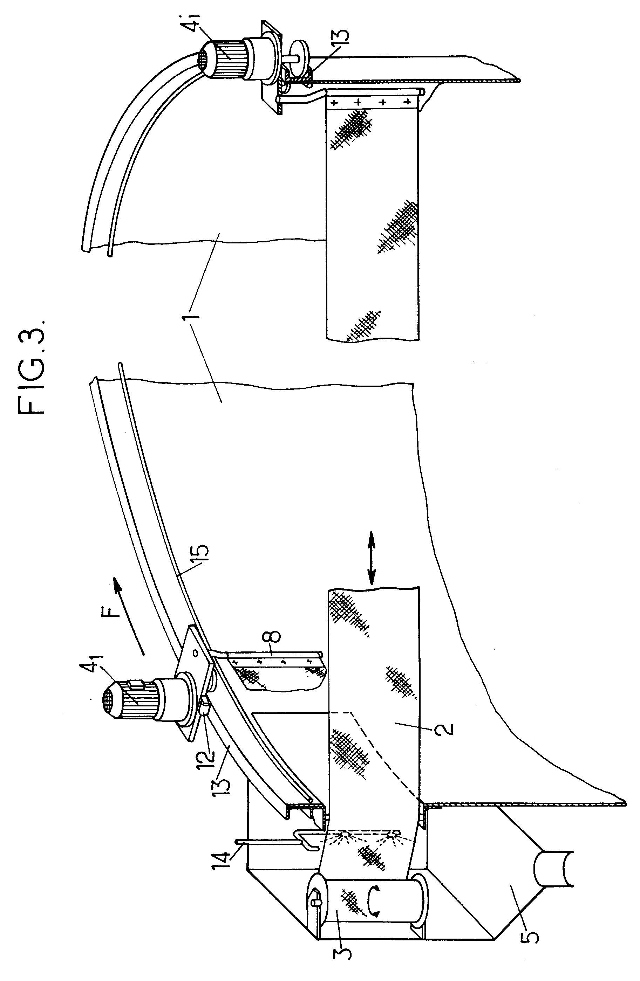

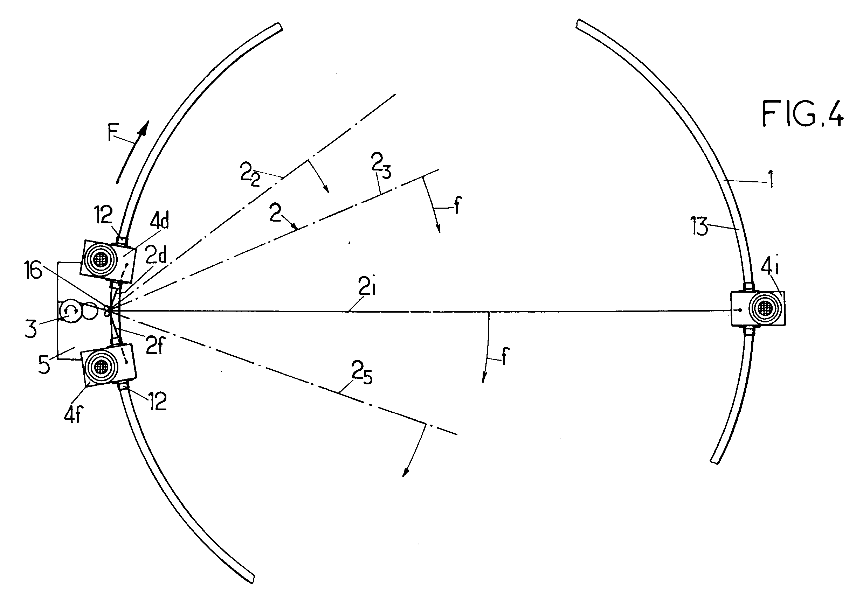

Le mode de réalisation décrit à titre de variante avec référence aux figures 3 et 4 est simplifié, du fait que la toile filtrante 2 est ici directement tendue entre des guides 16 associés à l'enrouleur-dérouleur 3 et les moyens moteurs 4, sans tôle radiale mobile ni fixe. Sur ces figures, on a toutefois utilisé les mêmes références que sur les figures 1 et 2 pour désigner les autres organes qui sont communs aux deux modes de réalisation, de sorte qu'il n'est pas nécessaire de les décrire à nouveau.

Sur la figure 4 on a repéré les positions successives de la toile filtrante 2 au cours d'une phase d'écumage par les références 2_{d}....2ᵢ....2_{f}, cette toile se déplaçant alors dans le sens des flèches f. On voit que jusqu'à la position intermédiaire 4ᵢ des moyens moteurs (diamétralement opposée aux guides 16) la toile 2 se déroule de l'enrouleur 3, lequel est débrayé de son moteur d'entraînement. Ensuite la longueur de toile doit diminuer, entre 2ᵢ et 2_{f}, ce qui est obtenu par l'entraînement positif de l'enrouleur 3 dans le sens de l'enroulement.

Bien entendu, comme dans le mode de réalisation précédent la toile 2 pousse devant elle, lors de ce déplacement, les matières flottantes à évacuer, jusqu'à l'encoche qui communique avec le déversoir 5.

Il est à noter que l'on peut prévoir un apport d'eau dans la cuve, pour amener les matières à éliminer au niveau de l'encoche 10, comme dans le cas du premier mode de réalisation.

Dans le second mode de réalisation qui vient d'être décrit, on voit qu'en ramenant les moyens moteurs 4 de la position 4_{f} à la position 4_{d}, dans le sens inverse à celui de la flèche F, on peut effectuer une autre opération d'écumage. On peut aussi ramener la toile 2 "à vide" vers sa position initiale 2_{d} et procéder à son lavage, comme dans le premier mode de réalisation.

## Revendications

1. Installation pour l'écumage d'une cuve (1), caractérisée en ce qu'elle comporte une toile filtrante de balayage plane (2) et maintenue dans un plan vertical, qui peut être entraînée en rotation de sorte que son bord inférieur balaye la surface supérieure du liquide contenu dans la cuve (1) pour en éliminer l'écume en la poussant vers un déversoir (5).

2. Installation selon la revendication 1, caractérisée en ce que ladite toile filtrante (2) est tendue entre un enrouleur-dérouleur (3) et des moyens moteurs (4).

3. Installation selon la revendication 2, caractérisée en ce que l'enrouleur-dérouleur (3) est disposé à la périphérie de la cuve, et en ce que lesdits moyens moteurs (4) sont agencés pour se déplacer le long de cette périphérie.

4. Installation selon l'une quelconque des revendications précédentes, caractérisée en ce que la cuve (1) est pourvue d'une tôle pleine verticale fixe (9), radiale, aboutissant juste en aval d'une encoche d'évacuation (10) en communication avec ledit déversoir (5).

5. Installation selon la revendication 4, caractérisée en ce que ladite toile filtrante (2) passe sur un pivot central (6) de la cuve (1).

6. Installation selon les revendications 4 et 5, caractérisée en ce que ledit pivot (6) sert de support à la fois à ladite tôle fixe (9) et à une tôle verticale mobile et perforée (11), également radiale, reliée auxdits moyens moteurs (4) de sorte à pouvoir également parcourir la surface de la cuve (1) derrière ladite toile filtrante de balayage (2).

7. Installation selon l'une quelconque des revendications précédentes, caractérisée en ce qu'elle comporte des moyens (14) de nettoyage de ladite toile.

8. Installation selon l'une quelconque des revendications 1 à 3, caractérisée en ce que ladite toile filtrante (2) est tendue directement entre l'enrouleur-dérouleur (3) et lesdits moyens moteurs (4).

## Patentansprüche

1. Vorrichtung zum Entschäumen eines Bottichs (1),
dadurch gekennzeichnet, daß sie ein ebenes Abstreif-Filtertuch (2) aufweist, das in einer vertikalen Ebene gehalten ist und das derart in Drehung antreibbar ist, daß seine Unterkante die Oberfläche der in dem Bottich (1) enthaltenen Flüsigkeit überstreicht, um von dieser den Schaum zu entfernen und ihn in Richtung auf ein Überlaufwehr (5) zu schieben.

2. Vorrichtung nach Anspruch 1,
dadurch gekennzeichnet, daß das Filtertuch (2) zwischen einer Aufwickel-Abwickelvorrichtung (3) und Antriebseinrichtungen (4) ausgespannt ist.

3. Vorrichtung nach Anspruch 2,
dadurch gekennzeichnet, daß die Aufwickel-Abwickelvorrichtung (3) am Umfang des Bottichs angeordnet ist, und daß die Antriebseinrichtungen (4) derart ausgebildet sind, daß sie sich entlang dieses Umfanges bewegen.

4. Vorrichtung nach einem der vorhergehenden Ansprüche,
dadurch gekennzeichnet, daß der Bottich (1) mit einem vertikalen vollwandigen radialen festen Blech (9) versehen ist, das gerade stromabwärts von einer Auslaßöffnung (10) endet, die in Verbindung mit dem Überlaufwehr (5) steht.

5. Vorrichtung nach Anspruch 4,
dadurch gekennzeichnet, daß das Filtertuch (2) über einen in der Mitte liegenden Schwenkpunkt (6) des Bottichs (1) läuft.

6. Vorrichtung nach den Ansprüchen 4 und 5,
dadurch gekennzeichnet, daß der Schwenkpunkt (6) zur Halterung sowohl des festen Bleches (9) als auch eines vertikalen beweglichen und perforierten Bleches (11) dient, das sich ebenfalls in Radialrichtung erstreckt und mit den Antriebseinrichtungen (4) derart verbunden ist, daß es ebenfalls die Oberfläche des Bottichs (1) hinter dem Abstreif-Filtertuch (2) überstreichen kann.

7. Vorrichtung nach einem der vorhergehenden Ansprüche,
dadurch gekennzeichnet, daß sie Einrichtungen (14) zur Reinigung des Filtertuches aufweist.

8. Vorrichtung nach einem der Ansprüche 1 bis 3,
dadurch gekennzeichnet, daß das Filtertuch (2) direkt zwischen der Aufwickel-Abwickelvorrichtung (3) und den Antriebseinrichtungen (4) ausgespannt ist.

## Claims

1. An installation for skimming a tank (1),
characterised in that it comprises a flat sweeping filter cloth (2) held in a vertical plane and rotatable so that its bottom edge sweeps the top surface of the liquid contained in the tank (1) in order to eliminate the scum by pushing it to an overflow (5).

2. An installation according to claim 1,
characterised in that the said filter cloth (2) is stretched between a take-up and pay-out device (3) and drive means (4).

3. An installation according to claim 2,
characterised in that the take-up and pay-out device (3) is disposed at the periphery of the tank and in that the said drive means (4) are adapted to move along said periphery.

4. An installation according to any one of the preceding claims, characterised in that the tank (1) is provided with a radial stationary vertical solid metal plate (9) terminating just downstream of a discharge notch (10) communicating with the said overflow (5).

5. An installation according to claim 4,
characterised in that the said filter cloth (2) moves on a central pivot (6) of the tank (1).

6. An installation according to claims 4 and 5,
characterised in that the said pivot (6) acts as a support both for the stationary metal plate (9) and a likewise radial movable and perforate vertical metal plate (11) connected to said drive means (4) so as also to be able to traverse the surface of the tank (1) behind the said sweeping filter cloth (2).

7. An installation according to any one of the preceding claims, characterised in that it comprises means (14) for cleaning said cloth.

8. An installation according to any one of claims 1 to 3, characterised in that the said filter cloth (2) is stretched directly between the take-up and pay-out device (3) and the said drive means (4).
